Europäisches Patentamt

(19) European Patent Office

Office européen des brevets

(11) Publication number: **0 096 012**
**B1**

(12) # EUROPEAN PATENT SPECIFICATION

(45) Date of publication of the patent specification:
25.09.85

(21) Application number: **83830097.8**

(22) Date of filing: **17.05.83**

(51) Int. Cl.⁴: **F 16 H 37/02**

(54) **Drive transmission device for motor vehicles.**

(30) Priority: **28.05.82 IT 6768882**

(43) Date of publication of application:
**07.12.83 Bulletin 83/49**

(45) Publication of the grant of the patent:
**25.09.85 Bulletin 85/39**

(84) Designated Contracting States:
**AT BE CH DE FR GB LI NL SE**

(56) References cited:
**DE - A - 2 619 898**
**DE - A - 2 948 194**
**DE - A - 2 948 195**
**US - A - 3 203 277**
**US - A - 4 170 905**

(73) Proprietor: **FIAT AUTO S.p.A., Corso Giovanni Agnelli 200, I-10135 Torino (IT)**

(72) Inventor: **Falzoni, Gianluigi, Via Malta 36/10 bis, I-10141 Torino (IT)**

(74) Representative: **Buzzi, Franco et al, c/o Jacobacci-Casetta & Perani S.p.A. Via Alfieri, 17, I-10121 Torino (IT)**

## Description

The present invention relates to a device for transmitting drive from the drive shaft driven by the engine to the axle-shafts of the driven wheels of a motor vehicle, of the type comprising a drive shaft driven by the engine driving shaft, a hollow main shaft rotatably mounted on the drive shaft and carrying an expansible driving pulley, a driven shaft carrying an expansible driven pulley which is driven by a V-belt from the driving pulley for forward drive, hydraulically-operated means for controlling the expansion of the driving and driven pulleys, a reverser unit for the transmission of reverse drive from the drive shaft to the driven shaft, an intermediate shaft having a gear meshed with a gear on the driven shaft, and a differential driven by the intermediate shaft and driving the axle-shafts of the vehicle. Such a transmission is known e.g. from DE-A-2619898.

The object of the present invention is to provide a drive transmission device of the aforesaid type in which the reverser unit is of small bulk and limited cost, and solves, in a simple manner and with limited weight, the problem of having a fixed connection between the axle-shafts and a driving shaft in an automatic gear-box.

In order to achieve this object, the present invention provides a drive transmission device of the aforesaid type, in which the reverser unit is constituted by an input gear carried by the drive shaft and freely-rotatable thereon, an output gear carried rigidly by the driven shaft and constantly meshed with the input gear, a hub keyed onto the drive shaft and provided with a sleeve which is slidable between two positions in which the drive shaft is rendered rigid with the input gear for reverse drive, and rigid with the expansible driving pulley for forward drive, respectively, and means for displacing the slidable sleeve between the two positions.

One embodiment of the present invention will now be described, by way of example, with reference to the single appended drawing which shows a device according to the invention partially sectioned along its longitudinal axis.

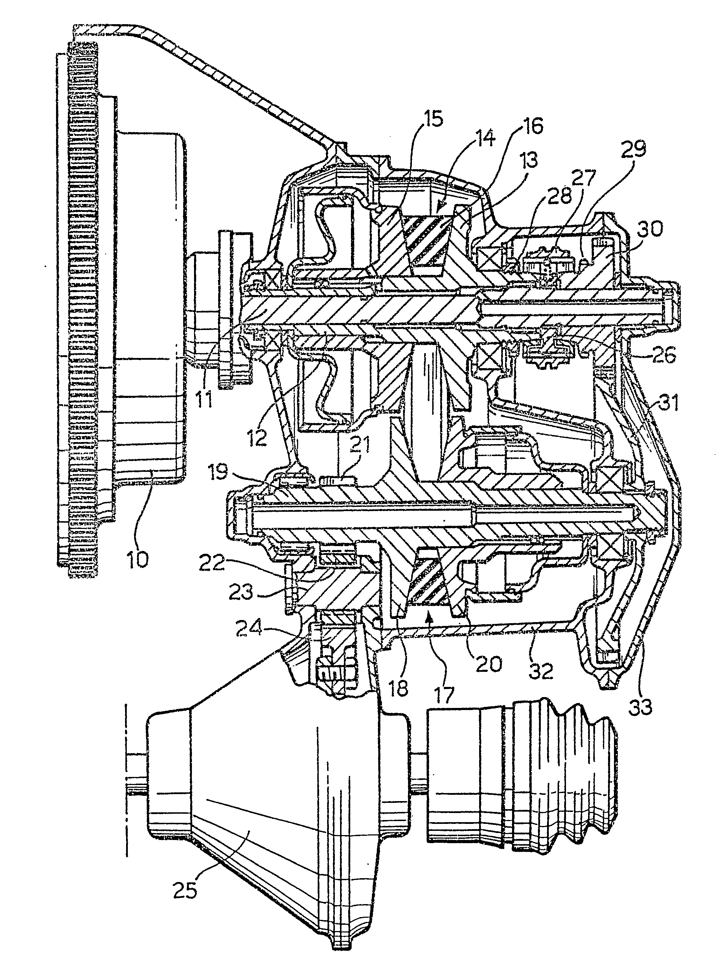

Referring now to the drawing, a clutch unit 10 of a motor vehicle engine is connected to a drive shaft 11 which is rotatably mounted in bearings and is driven by the driving shaft (not shown) of the engine through the clutch unit 10.

A hollow main shaft 12 is mounted coaxially and rotatably on the drive shaft 11, and is formed in one piece with one half-pulley 13 of an expansible driving pulley 14. The other half-pulley 15 of the driving pulley 14 is keyed onto the shaft 12 so as to be axially slidable thereon.

A V-belt 16 connects the pulley 14 to the expansible driven pulley 17. One half-pulley 18 of the driven pulley 17 is formed integrally with a driven shaft 19 rotatably mounted parallel to the shaft 11, and the other half-pulley 20 is keyed to the shaft 19 for axial sliding movement thereon.

A gear 21 formed on the shaft 19 is constantly meshed with the gear 22 of an intermediate shaft 23. The gear 22 is also meshed with the crown wheel 24 of the differential 25.

On the drive shaft 11 is keyed a hub 26 provided with a sleeve 27 which is slidable by known means (not shown) between respective positions in which it renders the hub 26, and hence the shaft 11, rigid with a crown wheel 28 fixed to the main shaft 12 carrying the pulley 14, and with a crown wheel 29 formed in one piece with an input gear 30 mounted rotatably and coaxially on the drive shaft 11. The gear 30 is, in turn, constantly meshed with an output gear 31 keyed onto the driven shaft 19.

The pairs of gears 30, 31 with the crown wheels 28, 29, the hub 26, and the sleeve 27, together with the end parts of the shafts 11, 12, 19, are housed in a casing which is separate from the rest of the device. This casing is formed by the wall 32 of the housing for the pulleys 14, 17 and a lid 33 fixed thereto in known manner.

The drive transmission device described above operates as follows:

In order to achieve forward movement, it is necessary to slide the sleeve 27 into the position in which it meshes with the crown wheel 28, whereby drive is transmitted from the shaft 11 to the pulleys 14, 17, and the differential 25 is thus driven in the same sense as the shaft 11 through the driven shaft 19 and the intermediate shaft 23.

If the sleeve 27 is displaced so that it meshes with the crown wheel 29, however, a reverse movement is achieved because the driven shaft 19 rotates in the opposite sense from the shaft 11 due to the meshing of the gears 30, 31, and thus drives the intermediate shaft 23 and the differential 25 in this opposite sense.

## Claim

A device for transmitting drive from the engine to the axle-shafts of the driven wheels of a motor vehicle, comprising:
- a drive shaft (11) driven by the engine driving shaft;
- a hollow main shaft (12) rotatably mounted on the drive shaft (11) and carrying an expansible driving pulley (14);
- a driven shaft (19) carrying an expansible driven pulley (17) which is driven by a V-belt (16) from the driving pulley (14) for forward drive;
- hydraulically-operated means for controlling the expansion of the driving and driven pulleys (14, 17);
- a reverser unit (26, 27, 30, 31) for the transmission of reverse drive from the drive shaft (11) to the driven shaft (19);
- an intermediate shaft (23) having a gear (22) meshed with a gear (21) on the driven shaft (19), and
- a differential (24, 25) driven by the intermediate shaft (23) and driving the axle-shafts of the vehicle, characterized in that the reverser unit is constituted by:

- an input gear (30) carried by the drive shaft (11) and freely rotatable thereon;
- an output gear (31) carried rigidly by the driven shaft (19) and constantly meshed with the input gear (30);
- a hub (26) keyed onto the drive shaft (11) and provided with a sleeve (27) which is slidable between two positions in which the drive shaft (11) is rendered rigid with the input gear (30) for reverse drive, and rigid with the expansible driving pulley (14) for forward drive, respectively, and
- means for displacing the slidable sleeve (27) between the two positions.

## Revendication

Dispositif destiné à transmettre un mouvement du moteur aux demi-arbres des roues motrices d'un véhicule à moteur, comprenant: un arbre d'entraînement (11) entraîné par l'arbre moteur, de sortie du moteur, un arbre principal creux (12) monté rotatif sur l'arbre d'entraînement (11) et qui porte une poulie motrice expansible (14), un arbre récepteur (19) portant une poulie réceptrice expansible (17), qui est entraînée par une courroie trapézoïdale (16), prenant son mouvement sur la poulie motrice (14) pour l'entraînement en marche avant, des moyens à commande hydraulique servant à commander l'expansion des poulies motrice et réceptrice (14, 17), un inverseur (26, 27, 30, 31) servant pour la transmission de la force motrice de l'arbre d'entraînement (11) à l'arbre récepteur (19) en marche arrière, un arbre intermédiaire (23) portant un pignon (22) en prise avec un pignon (21) monté sur l'arbre récepteur (19), et un différentiel (24, 25) entraîné par l'arbre intermédiaire (23) et qui entraîne les demi-arbres du véhicule, caractérisé en ce que l'inverseur est constitué par: un pignon d'entrée (30) porté par l'arbre d'entraînement (11) et qui peut tourner librement sur ce dernier; un pignon de sortie (31) porté rigidement par l'arbre récepteur (19) et en prise constante avec le pignon d'entrée (30); un moyeu (26) claveté sur l'arbre d'entraînement (11) et muni d'un manchon (27) qu'on peut faire coulisser entre deux positions dans lesquelles l'arbre d'entraînement (11) est rendu soit rigidement solidaire du pignon d'entrée (30) pour l'entraînement en marche arrière, soit rigidement solidaire de la poulie motrice expansible (14) pour l'entraînement en marche avant, et des moyens servant à déplacer le manchon coulissant (27) entre ces deux positions.

## Patentanspruch

Vorrichtung zur Antriebsübertragung vom Motor auf die Achswellen der Antriebsräder eines Kraftfahrzeuges, folgendes aufweisend:
- eine von der Motorantriebswelle getriebene Antriebswelle (11);
- eine drehbare auf der Antriebswelle (11) angebrachte hohle Hauptwelle (12), die eine ausdehnbare Antriebsscheibe (14) trägt;
- eine getriebene Welle (19), die eine dehnbare, getriebene Scheibe (17) trägt, welche von der Antriebsscheibe (14) über einen Keilriemen (16) für Vorwärtsfahrt angetrieben ist;
- hydraulisch betätigte Vorrichtungen zur Steuerung der Ausdehnung der Antriebsscheibe (14) und der getriebenen Scheibe (17);
- eine Umsteuerungseinheit (26, 27, 30, 31) zur Übertragung eines Rückwärtsantriebes von der Antriebswelle (11) auf die getriebene Welle (19);
- eine Zwischenwelle (23) mit einem Zahnrad (22), welches in ein Zahnrad (21) auf der getriebenen Welle (19) eingreift, und
- ein von der Zwischenwelle (23) angetriebenes Differential (24, 25), welches die Achswellen des Kraftfahrzeuges antreibt, dadurch gekennzeichnet, dass die Umsteuerungseinheit folgendes aufweist:
- ein Eingangszahnrad (30), welches von der Antriebswelle (11) getragen wird und auf dieser Welle frei verdrehbar ist;
- ein Ausgangszahnrad (31), welches starr von der getriebenen Welle (19) getragen wird und ständig in das Eingangszahnrad (30) eingreift,
- eine Nabe (26), welche auf die Antriebswelle (11) aufgeteilt ist und eine Muffe (27) aufweist, die zwischen zwei Stellungen verschiebbar ist, in welchen die Antriebswelle starr mit dem Eingangszahnrad (30) für Rückwärtsfahrt bzw. mit der drehbaren Antriebsscheibe (14) für Vorwärtsfahrt in starre Verbindung gebracht wird, und
- eine Vorrichtung zur Verschiebung der verschiebbaren Muffe (27) zwischen den beiden Stellungen.